# EUROPÄISCHE PATENTANMELDUNG

(11) **EP 3 674 612 A1**
(43) Veröffentlichungstag der Anmeldung: **01.07.2020**
(21) Anmeldenummer: 19217898.6
(22) Anmeldetag: 19.12.2019
(51) Int. Cl.: F24D 3/14, F24D 13/02

(54) **FLÄCHENTEMPERIERUNGSSYSTEM**

(30) Priorität: 19.12.2018 DE 202018107263 U
(71) Anmelder: REHAU AG + Co, 95111 Rehau (DE)
(72) Erfinder: May, Dirk, 90427 Nürnberg (DE); Vohler, Tobias, 92318 Neumarkt (DE)

(57) **Zusammenfassung**

Die vorliegende Erfindung bezieht sich auf ein Flächentemperierungssystem (3), das mindestens zwei flexible Heizelemente (1, 2, 2'), die getrennt voneinander beheizbar sind; sowie ein Trägerelement (9), auf dem die Heizelemente (1, 2, 2') verlegt sind; umfasst, wobei sich das Flächentemperierungssystem (3) erfindungsgemäß dadurch auszeichnet, dass mindestens ein Heizelement (1) als flexibel verlegbares Wärmetransferrohr (1) ausgebildet ist und mindestens ein Heizelement (2, 2') als flexibel verlegbares Heizkabel (2, 2') ausgebildet ist.

## Beschreibung

Die vorliegende Erfindung betrifft ein Flächentemperierungssystem, das mindestens zwei flexible Heizelemente, die getrennt voneinander beheizbar sind, sowie ein Trägerelement, auf dem die Heizelemente verlegt sind, umfasst.

Derartige Flächentemperierungssysteme und darin einsetzbare flexible Heizelemente sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung beispielsweise aus der DE 20 2010 009 133 U1 ist es bekannt, die Rohrleitungen mittels einer Klettverbindung auf den Trägern festzulegen. Nachteilig an derartigen Flächentemperierungssystemen auf Rohrleitungsbasis wird gesehen, dass in der warmen Jahreszeit erhitztes Wärmeträgermedium erzeugt und bevorratet werden muss, um das Flächentemperierungssystem zu betreiben.

Daneben sind im Stand der Technik, beispielsweise aus der DE 29 49 511 A1 und der DE 298 12 219 U1, elektrische Flächentemperierungssystem bekannt, bei denen an einer Seite einer vorkonfektionierten Temperierungsmatte eine als Widerstandsheizleitung eingerichtete Temperiereinrichtung, beispielsweise mittels Klebeband, Clips oder Haltern, befestigt ist. Nachteilig an solchen elektrischen Flächentemperierungssystemen nach dem Stand der Technik wird gesehen, dass die vorkonfektionierten Temperierungsmatten eine vorgegebene Größe aufweisen und sich daher nur sehr schwer an individuelle Grundrisse des zu beheizenden Raums anpassen lassen.

Dementsprechend liegt der vorliegenden Erfindung die Aufgabe zugrunde, ein Flächentemperierungssystem zur Verfügung zu stellen, das mindestens einen der Nachteile des Stands der Technik überwindet. Insbesondere soll sich das erfindungsgemäße Flächentemperierungssystem einfach und schnell auch in Räumen mit beliebigem Grundriss verlegen lassen. Darüber hinaus soll das erfindungsgemäße Flächentemperierungssystem die Bevorratung von erhitztem Wärmeträgermedium unnötig machen.

Diese und andere Aufgaben werden durch ein Flächentemperierungssystem mit den Merkmalen des Anspruchs 1 gelöst. Bevorzugte Ausführungsformen der Erfindung sind in den davon abhängigen Ansprüchen beschrieben.

Gemäß der vorliegenden Erfindung wurde erkannt, dass sich eine Flexibilität hinsichtlich der Bevorratung eines erhitzten Wärmeträgermediums bei gleichzeitiger Verlegeflexibiltät für individuelle Raumquerschnitte dadurch erzielen lässt, dass zum einen mindestens ein flexibel verlegbares Wärmetransferrohr und zum anderen mindestens ein als flexibel verlegbares Heizkabel gleichzeitig als getrennt voneinander betreibbare Heizelemente in dem erfindungsgemäßen Flächentemperierungssystem eingesetzt werden. Beide Heizelemente können dann beliebig auf einem in dem Raum verlegten Trägerelement ohne festgelegte Verlegerichtung verlegt werden. Für den Betrieb des erfindungsgemäßen Flächentemperierungssystems im Winter kann durch das Wärmetransverrohr erhitztes Wärmeträgermedium geleitet werden, während für den für den Sommerbetrieb des erfindungsgemäßen Flächentemperierungssystems das Heizkabel eine Nutzung von überschüssigem Strom einer ggf. im Gebäude vorhandenen Photovoltaikanlage erlaubt, deren Rentabilität so durch einen hohen Eigenstromverbrauch in der Weise gesteigert werden kann. Gleichzeitig erlaubt das Vorhandensein des Wärmetransferrohrs im Sommer einen Kühlbetrieb, indem durch das Wärmetransferrohr gekühltes Wärmeträgermedium geleitet wird.

Dementsprechend liegt die vorliegende Erfindung in der Bereitstellung eines Flächentemperierungssystems, das mindestens zwei flexible Heizelemente, die getrennt voneinander beheizbar sind, sowie ein Trägerelement, auf dem die Heizelemente verlegt sind, umfasst, wobei sich das Flächentemperierungssystemen erfindungsgemäß dadurch auszeichnet, dass mindestens ein Heizelement als flexibel verlegbares Wärmetransferrohr ausgebildet ist und mindestens ein Heizelement als flexibel verlegbares Heizkabel ausgebildet ist.

Wie er hierin verwendet wird, bedeutet der Begriff "Heizkabel" eine Widerstandsheizleitung. In Bezug auf das Heizkabel und das Wärmetransferrohr bzw. das Heizelement allgemein wird der Begriff "flexibel" hierin so verwendet, dass das erfindungsgemäß verwendete flexible Heizkabel Biegeradien ermöglicht, die zur Verlegung eines Heizelements für ein Flächentemperierungssystem erforderlich sind.

Hinsichtlich des erfindungsgemäßen Flächentemperierungssystems kann es bevorzugt sein, wenn das mindestens eine Wärmetransferrohr und/oder das mindestens eine Heizkabel mittels Klebeband, Clips, Tackerelementen und/oder Haltern an dem Trägerelement festgelegt sind. Derartige Befestigungsmittel bieten einen bewährt guten Halt des Wärmetransferrohrs und/oder des Heizkabels am Trägerelement und erlauben eine beliebige Verlegung beider am Boden.

Es kann auch nützlich sein, wenn das mindestens eine Wärmetransferrohr und/oder das mindestens eine Heizkabel außenseitig zumindest teilweise von einem ersten Element einer Klettverbindung ummantelt ist/sind. Eine Verlegung mittels Klett beschleunigt den Vorgang der Verlegung der beiden Heizelemente und bietet aufgrund der reversibel ausbildbaren Klettverbindung einfach die Möglichkeit zur Korrektur der Verlegung, indem die Klettverbindung gelöst und das Wärmetransferrohr und/oder das Heizkabel in der gewünschten Anordnung verlegt werden. Dies erlaubt eine flexible Verlegung der beiden Heizelemente, die sich an unterschiedliche Raumgeometrien anpassen lässt.

Darüber hinaus kann es sich als günstig erweisen, wenn das erste Element der Klettverbindung spiralförmig oder doppelspiralförmig an der Außenseite des mindestens einen Wärmetransferrohrs und/oder des mindestens einen Heizkabels angeordnet ist. Bei geringem Materialaufwand sorgt dies für eine dennoch hohe Häufigkeit der Kontaktstellen zwischen den Heizelementen und dem Trägerelement.

Es kann auch günstig sein, wenn an einer Seite des Trägerelements ein zweites Element der Klettverbindung angeordnet ist, so dass das/die flexible(n) Heizelement(e) lösbar unter Bildung von Klettverbindungen an dem Trägerelement festlegbar ist/sind. Dies soll eine ausreichend starke Klettverbindung zwischen dem Heizelement/den Heizelementen und dem Trägerelement gewährleisten.

Darüber hinaus hat es sich als besonders günstig erwiesen, wenn das Trägerelement einen formstabilen, flächigen Träger umfasst. Ein derartiger formstabiler, flächiger Träger bietet einen ausreichend festen Untergrund für die Befestigung der Heizelemente. Dabei kann der formstabile, flächige Träger insbesondere als Polymerschaumstoff-Dämmschicht oder als Kunststoff-Hohlkammerplatte ausgebildet sein. Eine derartige Ausgestaltung des formstabilen, flächigen Trägers bietet eine ausreichend starke Verbindung zu den Heizelementen bei günstigen und leicht erhältlichen Trägern. Darüber hinaus sind zu für verschiedene Befestigungsarten der Heizelemente geeignet. Hohlkammerplatten aus einem Kunststoffmaterial, wie vorzugsweise Polyethylen (PE), Polypropylen (PP) und/oder Polyvinylchlorid (PVC), weisen eine ausreichende Elastizität auf, um beim Verlegen des Heizelements auf der mit dem zweiten Element der Klettverbindung versehenen Kunststoff-Hohlkammerplatte bei Einwirkung eines äußeren Drucks (beispielsweise wenn der Handwerker mit einem Fuß auf die entsprechende Stelle tritt oder mit der Hand darauf drückt oder darüber streicht) auf die Hohlkammerplatte entsprechend nachzugeben. Dadurch wird die Kontaktfläche zwischen dem flexiblen Heizelement und der Trägerfolie vergrößert, was zu einer stärker ausgebildeten Klettverbindung führt. Weiter ist eine derartige Hohlkammerplatte starr genug, um auch bei einer geringen Höhe von vorzugsweise etwa 2,0 mm bis 4,0 mm eben auf einem Untergrund auslegbar zu sein. Dies ermöglicht eine geringe Aufbauhöhe des erfindungsgemäßen Flächentemperierungssystems, das sich daher insbesondere für die Verwendung bei Altbausanierungen, bei denen häufig oberhalb des bereits vorhandenen Estrichs wenig Raum zur Verlegung einer neuen Fußbodenheizung bleibt, in besonderer Weise eignet. Derartige Kunststoff-Hohlkammerplatten zur Verwendung in dem erfindungsgemäßen Flächentemperierungssystem sind in der DE 20 2014 105 1263 U1 beschreiben, auf die hierin in Bezug auf das Material und den Aufbau einer Kunststoff-Hohlkammerplatte als formstabiler, flächiger Träger hierin explizit Bezug genommen wird. Hinsichtlich Polymerschaumstoff-Dämmschichten als formstabile, flächige Träger sind Polymerschaumstoff-Dämmschicht mit einer Dicke im Bereich von 1 cm bis 20 cm aus Materialien wie Polyurethanschaumstoff (PU-Schaum) oder expandiertem Polystyrol (EPS) besonders bevorzugt. Hinsichtlich der Details einer Polymerschaumstoff-Dämmschicht als formstabiler, flächiger Träger wird auf die EP 2 995 870 A1 verwiesen, auf die diesbezüglich explizit Bezug genommen wird. Dabei kann es günstig sein, wenn das Trägerelement eine das zweites Element der Klettverbindung tragende Trägerfolie umfasst, die auf einer Seite des formstabilen, flächigen Trägers angeordnet ist.

Darüber hinaus kann es bevorzugt sein, wenn der formstabile, flächige Träger an seiner der Trägerfolie abgewandten Seite mit einer Abdeckfolie verbunden ist, die bevorzugt wasserabweisend ausgeführt sein kann. Dadurch kann effektiv verhindert werden, dass Leckagewasser oder Feuchtigkeit in den Boden des Raums gelangt. Die Abdeckfolie ist an dem formstabilen flächigen Träger vorzugsweise mittels eines Klebstoffes oder in anderer Weise verbunden bevorzugt unlösbar befestigt. Hierzu ist es bevorzugt, wenn die Abdeckfolie als Verbundfolie ausgebildet ist, deren dem formstabilen, flächigen Träger zugewandte Seite als Metallschicht, vorzugsweise als Aluminiumschicht ausgebildet ist. Durch einen derartigen Aufbau lassen sich die isolierenden Eigenschaften des formstabilen, flächigen Trägers weiter erhöhen. Dabei ist es besonders hilfreich, wenn die Abdeckfolie neben der Metallschicht eine Trägerschicht, vorzugsweise aus Papier, und eine Schutzschicht, vorzugsweise aus Polymermaterial, insbesondere Polyethylen, umfasst. Die Trägerfolie ist bevorzugt flächig mit dem zweiten Element der Klettverbindung versehen, vorzugsweise ist die gesamte Fläche der Trägerfolie mit dem zweiten Element der Klettverbindung versehen. Die so gebildete flächige Klettverbindung ermöglicht eine Rohrverlegung auf der gesamten Fläche der Trägerfolie in einem nahezu beliebigen Verlegemuster.

Es kann auch von Vorteil sein, wenn das Trägerelement als eine Trägerfolie ausgebildet ist, bei der zumindest auf einer Seite das zweite Element der Klettverbindung angeordnet ist. In einer derartigen Ausführungsform ist die Trägerfolie selbst das formstabile, flächige Element, so dass ein besonders einfaches erfindungsgemäßes Flächentemperierungssystem mit sehr geringer Aufbauhöhe resultiert. Dies macht es für eine Verlegung des erfindungsgemäßen Flächentemperierungssystems als Fußbodenheizung für die Gebäudesanierung besonders geeignet.

Ebenso kann es günstig sein, wenn das Trägerelement faltbar und/oder zusammenrollbar ausgebildet ist. Dies ermöglicht einen einfachen Transport des Trägers des erfindungsgemäßen Flächentemperierungssystems an den Einsatzort.

Gemäß der vorliegenden Erfindung ist der formstabile flächige Träger bzw. das formstabile, flächige Element vorzugsweise so stabil ausgeführt, dass er für die Verlegung des flexiblen Heizkabels als Bestandteil einer Fußbodenheizung geeignet ist.

In bevorzugten Ausführungsformen des erfindungsgemäßen Flächentemperierungssystems können in dem mindestens einen Heizkabel jeweils auch eine Mehrzahl von Heizdrähten geführt sein. Dadurch kann das Beheizen eines Raums durch das erfindungsgemäße Flächentemperierungssystem beschleunigt werden.

Es kann auch von Nutzen sein, wenn in dem mindestens einem Heizkabel mindestens ein Heizdraht geführt ist, der in dem Heizkabel in der Längsrichtung des Heizkabels in eine Richtung geführt, an einem Ende des Heizkabels umgelenkt und in dem Heizkabel in die entgegengesetzte Richtung zurückgeführt wird. Dadurch muss das Heizkabel nur in die Verlegefläche hineingeführt und darin verlegt werden. Ein Herausführen des Heizkabels aus der Verlegefläche ist nicht erforderlich. So kann das Heizkabel mit noch größerer Variabilität verlegt werden.

Hinsichtlich des flexiblen Heizkabels des erfindungsgemäßen Flächentemperierungssystems ist es überdies bevorzugt, dass das flexible Heizkabel zwischen dem ersten Element der Klettverbindung einer Ummantelung des Heizkabels eine flexible, elastische Ummantelung umfasst. Beim Verlegen des flexiblen Heizkabels auf dem Trägerelement passt sich die flexible, elastische Ummantelung aufgrund ihrer Elastitzität an die Oberfläche des Trägerelements an, wenn auf das flexible Heizkabel von außen Druck ausgeübt wird, beispielsweise indem der Verleger mit dem Fuß auf das flexible Heizkabel steigt oder mit der Hand darauf drückt oder darüber streicht. Dadurch wird die Kontaktfläche zwischen dem flexiblen Heizkabel und dem Trägerelement vergrößert, was zu einer stärker ausgebildeten Klettverbindung führt. Nach Wegfall des Drucks auf das flexible Heizkabel bleibt diese Kontaktfläche aufgrund der Klettverbindung im Wesentlichen unverändert. Darüber hinaus kann das flexible Kunststoffrohr beliebig auf dem mit der Trägerfolie versehenen formstabilen flächigen Träger ohne festgelegte Verlegerichtung verlegt werden. Ein Aufschwimmen des flexiblen Heizkabels in einem frisch verlegten Estrich ist weitestgehend ausgeschlossen.

Das flexibel verlegbare Wärmetransferrohr des erfindungsgemäßen Flächentemperierungssystems ist vorzugsweise als flexibles Kunststoffrohr ausgebildet. Wie er hierin verwendet wird, bedeutet der Begriff "Kunststoffrohr" ein Vollkunststoffrohr, Kunststoff-Verbundrohr oder ein Metall-Kunststoff-Verbundrohr. In Bezug auf das Kunststoffrohr bzw. das Wärmetransferrohr wird der Begriff "flexibel" hierin so verwendet, dass das flexible Kunststoffrohr bzw. das flexibel verlegbare Wärmetransferrohr Biegeradien ermöglicht, die zur Verlegung eines Rohres für ein Flächentemperierungssystem erforderlich sind. Bevorzugt handelt es sich bei dem Kunststoffmaterial des Wärmetransferrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahl-vernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material weiter einen Haftvermittler (vorzugsweise ein funktionalisiertes Polyolefin, insbesondere ein Maleinsäureanhydrid-gepfropftes LLDPE (lineares Polyethylen geringerer Dichte)) und/oder eine Diffusionssperrschicht, insbesondere aus Polyvinylakohol (PVA), Ethylen-Vinylalkohol-Copolymer (EVOH), oder einem Metall, wie z. B. Aluminium, umfassen.

Hinsichtlich des Wärmetransferrohrs des erfindungsgemäßen Flächentemperierungssystems ist es überdies bevorzugt, dass auch das Wärmetransferrohr zwischen einer ersten Schicht aus polymerem Material, die ein Lumen des Wärmetransferrohrs umgibt, und dem ersten Element der Klettverbindung eine flexible, elastische Ummantelung umfasst. Die Vorteile entsprechen den in Bezug auf das Heizkabel des erfindungsgemäßen Flächentemperierungssystems erläuterten.

Gemäß einer bevorzugten Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und den Heizelementen, wodurch die Heizelemente auf der Trägerfolie reversibel festgelegt werden. Dabei ist es bevorzugt, wenn das erste Element der Klettverbindung die Haken, Schlingen und/oder Fasern aufweist, während das zweite Element der Klettverbindung durch das Gewirke, das Vlies, das Veloursgewebe oder ein Plüsch-, Frottee- oder sonstiges textiles Flächengebilde gebildet wird. Umgekehrt ist auch möglich, dass das erste Element der Klettverbindung durch das Gewirke, das Vlies, das Veloursgewebe, das Plüsch-, Frottee- oder sonstiges textiles Flächengebilde gebildet wird, während das zweite Element der Klettverbindung die Haken, Schlingen und/oder Fasern aufweist.

Das erfindungsgemäße Flächentemperierungssystem sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 eine Ansicht auf ein Heizkabel und ein Wärmetransferrohr zur Verwendung in einem Flächentemperierungssystem gemäß einer Ausführungsform der vorliegenden Erfindung;
Fig. 2 eine perspektivische Ansicht auf einen Abschnitt eines Flächentemperierungssystems gemäß einer Ausführungsform der vorliegenden Erfindung;
Fig. 3 eine Ansicht eines Verlegemusters für ein Flächentemperierungssystem gemäß einer Ausführungsform der vorliegenden Erfindung; und
Fig. 4 eine Ansicht eines Verlegemusters für ein Flächentemperierungssystem gemäß einer weiteren Ausführungsform der vorliegenden Erfindung.

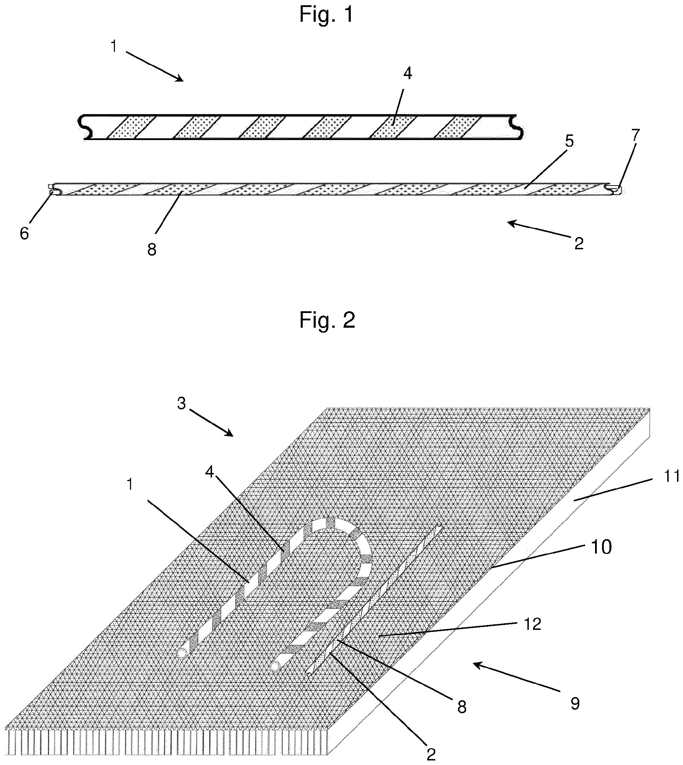

In Fig. 1 zeigt einen Abschnitt eines flexibel verlegbaren Wärmetransferrohrs 1 und eines daneben liegenden, flexibel verlegbaren Heizkabels 2 als getrennt voneinander betreibbare Heizelemente zur Verwendung in einem Flächentemperierungssystem 3 gemäß einer Ausführungsform der vorliegenden Erfindung.

Das flexibel verlegbare Wärmetransferrohr 1 ist als Metall-Kunststoff-Verbundrohr ausgebildet. Es umfasst eine erste Schicht aus polymerem Material, die ein Lumen zur Führung eines Wärmeträgermediums umgibt. In der in Fig.1 dargestellten Ausführungsform ist diese erste Schicht aus Peroxid-vernetztem Polyethylen (PE-Xa), um das herum in der angegeben Reihenfolge eine Haftvermittlerschicht und eine Diffusionssperrschicht aus Aluminium, wieder eine Haftvermittlerschicht und eine Schicht aus Polyethylen angeordnet sind. Bevorzugt ist das flexibel verlegbare Wärmetransferrohr 1 sauerstoffdicht gemäß DIN 4726. Das flexibel verlegbare Wärmetransferrohr 1 wird vorzugsweise durch Coextrusion hergestellt. Die Außenseite des flexibel verlegbare Wärmetransferrohr 1 bildet das erste Element 4 der Rohrklettverbindung, das als Band ausgebildet ist, das in Form einer Spirale um Metall-Kunststoff-Verbundrohr angeordnet ist. Das erste Element 4 der Rohrklettverbindung umfasst Haken, Fasern oder ähnliches.

Das flexibel verlegbare Heizkabel 2 umfasst eine Ummantelung 5 aus einem polymeren Material, in dem ein Heizdraht 6, insbesondere eine Widerstandsheizleitung beispielsweise aus Kupfer, geführt ist. Der Heizdraht 6 ist in dem Heizkabel 2 in dessen Längsrichtung geführt, ist an einem Ende 7 des Heizkabels 2 umgelenkt und ist in dem Heizkabel 2 in die entgegengesetzte Richtung zurückgeführt. Die Außenseite des flexiblen Heizkabels 2 ist in Form einer Spirale von einem ersten Element 8 einer Kabelklettverbindung gebildet. In der in Fig.1 dargestellten Ausführungsform ist die Ummantelung 5 aus Polyethylen (PE) gebildet. Die Außenseite des flexiblen Heizkabels 2 bildet das erste Element 8 der Klettverbindung, das ebenfalls als Band ausgebildet ist, das die Ummantelung 5 spiralförmig umgibt. Das erste Element 7 der Kabelklettverbindung umfasst wiederum Haken, Fasern oder ähnliches.

In Fig. 2 ist ein schematischer Abschnitt einer Ausführungsform eines Flächentemperierungssystems 3 gemäß der vorliegenden Erfindung in einer perspektivischen Ansicht gezeigt. Das erfindungsgemäße Flächentemperierungssystem 3 umfasst ein flexibel verlegbares Wärmetransferrohr 1 und ein flexibel verlegbares Heizkabel 2 als Heizelemente sowie ein Trägerelement 9, das eine Trägerfolie 10 sowie einen formstabilen, flächigen Träger 11 umfasst. Wie Fig. 2 zeigt, sind das flexibel verlegbare Wärmetransferrohr 1 und das flexibel verlegbare Heizkabel 2 in dem erfindungsgemäßen Flächentemperierungssystem 3 auf die Trägerfolie 10 aufgebracht, die wiederum flächig auf den formstabilen flächigen Träger 11 aufgebracht ist. An ihrer dem Heizkabel 2 zugewandten Seite umfasst die Trägerfolie 10 ein zweites Element 12 der Klettverbindung, das als Gewirke ausgebildet ist, alternativ auch als Vlies, Veloursgewebe, Plüsch-, Frottee- oder sonstiges textiles Flächengebilde ausgebildet sein kann. Das zweite Element 12 kann sowohl mit dem ersten Element 4 an dem Wärmetransferrohr 1 die Rohrklettverbindung als auch mit dem ersten Element 8 an dem Heizkabel 2 die Kabelklettverbindung eingehen. Das Wärmetransferrohr 1 und das Heizkabel 2 sind damit über das zweite Element 10 lösbar unter Bildung der Rohrklettverbindung und der Kabelklettverbindung an dem Trägerelement 9 festgelegt.

An der dem Heizkabel 2 abgewandten Seite der Trägerfolie 10 ist der formstabilen, flächigen Träger 11 angeordnet. Bei dem formstabilen, flächigen Träger 11 handelt es sich in dieser Ausführungsform der vorliegenden Erfindung um eine Hohlkammerplatte aus einem Kunststoffmaterial, die in der in Fig. 2 dargestellten Ausführungsform aus Polyethylen (PE), insbesondere Polyethylen hoher Dichte (HDPE) hergestellt ist. Alternativ können auch Polypropylen (PP), insbesondere statistisches Polypropylen (PP-R), oder Polyvinylchlorid (PVC), insbesondere Hart-PVC (PVC-U) zum Einsatz kommen. Die Hohlkammerplatte des erfindungsgemäßen Flächentemperierungssystems 3 ist vorzugsweise faltbar und/oder aufrollbar ausgebildet. Hierzu können die Stege einiger Hohlkammern der Hohlkammerplatte an der der Trägerfolie 10 gegenüberliegenden Seite der Hohlkammerplatte nicht vorhanden oder durchtrennt sein, wobei sich eine Durchtrennung vorzugsweise über die gesamte Breite der Hohlkammerplatte erstreckt. In alternativen Ausführungsformen können auch andere formstabile, flächige Träger 11, beispielsweise Polymerschaumstoff-Dämmschicht mit einer Dicke im Bereich von 1 cm bis 20 cm aus Materialien wie Polyurethanschaumstoff oder expandiertem Polystyrol, eingesetzt werden.

Auf die der Trägerfolie 10 abgewandten Seite des formstabilen, flächigen Trägers 12 kann eine Abdeckfolie aufgebracht sein, die bevorzugt aus einer vorzugsweise als einer Aluminiumfolie ausgebildeten Metallschicht, einem Papierträger und einer vorzugsweise als Polyethylenfolie ausgebildeten Schutzschicht aufgebaut ist, durch den die Abdeckfolie wasserabweisend ausgeführt ist. Dadurch kann effektiv verhindert werden, dass Leckagewasser oder Feuchtigkeit in den Boden des Raums gelangt.

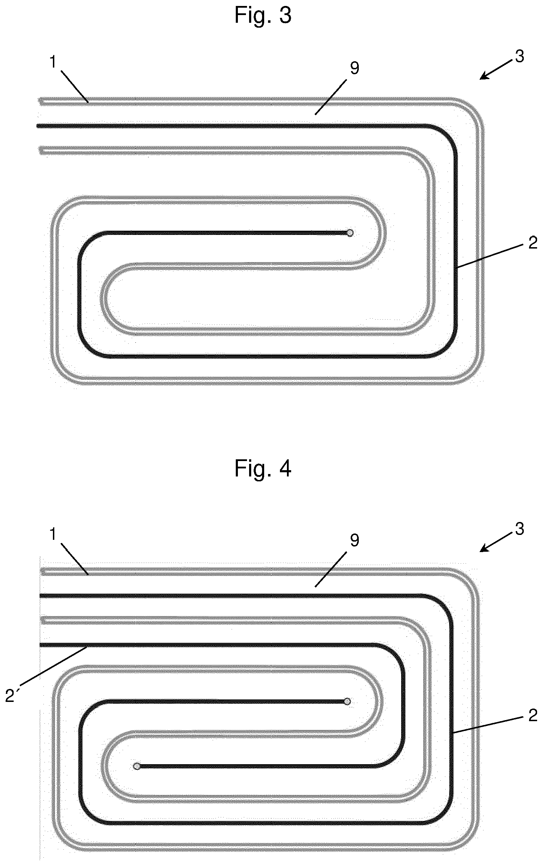

Zum Verlegen eines als Fußbodenheizung ausgebildeten erfindungsgemäßen Flächentemperierungselements 3 wird der mit der Trägerfolie 10 und ggf. der Abdeckfolie versehene formstabile, flächige Träger 11 zunächst auf dem Boden vollflächig ggf. nach vorherigem Zuschneiden ausgelegt. Daraufhin werden das flexibel verlegbare Wärmetransferrohr 1 und das flexibel verlegbare Heizkabel 2 in einem gewünschten Verlegemuster aufgelegt, beispielsweise wie in Fig. 3 und Fig. 4 gezeigt, auf die Trägerfolie 8 gelegt und angedrückt, so dass Klettverbindungen ausgebildet werden. Zur Korrektur des Verlegemusters können die reversibel ausgebildeten Klettverbindungen durch Anheben des Wärmetransferrohrs 1 und/oder des Heizkabels 2 vom Trägerelement 9 gelöst werden, wonach dieses erneut verlegt werden kann. Wenn das gewünschte Verlegemuster erzielt ist, wird die Anordnung abschließend mit Estrich vergossen.

Die Verwendung des flexibel verlegbaren Wärmetransferrohrs 1 und des flexibel verlegbaren Heizkabels 2 als Heizelemente in dem erfindungsgemäßen Flächentemperierungssystem 3 erlauben Verlegeflexibiltät für individuelle Raumquerschnitte, weil sich das Wärmetransferrohr 1 und das Heizkabel 2 beliebig auf einem in dem Raum verlegten Trägerelement 9 verlegen lassen. Dies erlaubt eine flexible Heizelementverlegung, die sich an unterschiedliche auch verwinkelte Raumgeometrien anpassen lässt. Für den Betrieb des erfindungsgemäßen Flächentemperierungssystems 3 im Winter kann standardmäßig durch das Wärmetransverrohr 1 erhitztes Wärmeträgermedium geleitet werden, während für den für den Sommerbetrieb des erfindungsgemäßen Flächentemperierungssystems 3 das Heizkabel 2 eine Nutzung von überschüssigem Strom einer ggf. im Gebäude vorhandenen Photovoltaikanlage erlaubt, deren Rentabilität so durch einen hohen Eigenstromverbrauch gesteigert werden kann. Gleichzeitig erlaubt das Vorhandensein des Wärmetransferrohrs 1 im Sommer einen Kühlbetreib, indem durch das Wärmetransferrohr gekühltes Wärmeträgermedium geleitet wird.

Fig. 3 zeigt eine Ansicht eines exemplarischen Verlegemusters für das erfindungsgemäße Flächentemperierungssystem 3. Darin ist das flexibel verlegbare Wärmetransferrohr 1 in Form eines Doppelmäanders auf das Trägerelement 7 aufgebracht. Das flexibel verlegbare Heizkabel 2 ist in einer Freifläche des Mäanders dem Verlauf des Wärmetransferrohrs 2 folgend eingebracht und auf dem Trägerelement 7 festgelegt. Bei dem in Fig. 4 gezeigten weiteren Verlegemuster für ein alternatives erfindungsgemäßes Flächentemperierungssystem 3 ist in eine weitere Freifläche des Doppelmäanders des flexibel verlegbaren Wärmetransferrohrs 1 zusätzlich ein zweites flexibel verlegbares Heizkabel 2' ebenfalls mäanderförmig dem Verlauf des Wärmetransferrohrs 2 folgend mit dem Trägerelement 7 verbunden. Die Heizdrähte in Fig. 3 und Fig. 4 des Heizkabels 2 und, wenn vorhanden, des zweiten Heizkabels 2' sind wiederum an einem Ende umgelegt und werden innerhalb des Heizkabels 2 bzw. des zweiten Heizkabel 2' zurückgeführt.

Die vorliegende Erfindung wurde exemplarisch unter Bezugnahme auf die in den Figuren dargestellten Ausführungsbeispiele der vorliegenden Erfindung im Detail erläutert. Dabei wurde das erfindungsgemäße Flächentemperierungssystem unter exemplarischer Verwendung eines Systems zur Klettverlegung detailliert beschrieben. Es versteht sich aber, dass in dem erfindungsgemäßen Flächentemperierungssystem zumindest teilweise auch andere Varianten zur Befestigung des flexibel verlegbaren Wärmetransferrohrs und/oder des flexibel verlegbaren Heizkabels an dem Trägerelement zum Einsatz kommen können, beispielsweise in an sich bekannter Weise mittels Klebeband, Clips, Tackerelementen und/oder Haltern. Die vorliegende Erfindung soll nicht auf diese erläuterten Ausführungsbeispiele beschränkt sein. Vielmehr ergibt sich der Umfang der vorliegenden Erfindung aus den Ansprüchen.

## Patentansprüche

1. Flächentemperierungssystem (3), umfassend:
- mindestens zwei flexible Heizelemente (1, 2, 2'), die getrennt voneinander beheizbar sind; sowie
- ein Trägerelement (9), auf dem die Heizelemente (1, 2, 2') verlegt sind;
**dadurch gekennzeichnet, dass**
mindestens ein Heizelement (1) als flexibel verlegbares Wärmetransferrohr (1) ausgebildet ist und mindestens ein Heizelement (2, 2') als flexibel verlegbares Heizkabel (2, 2') ausgebildet ist.

2. Flächentemperierungssystem (3) nach Anspruch 1, **dadurch gekennzeichnet, dass** das mindestens eine Wärmetransferrohr (1) und/oder das mindestens eine Heizkabel (2, 2') mittels Klebeband, Clips, Tackerelementen und/oder Haltern an dem Trägerelement (7) festgelegt sind.

3. Flächentemperierungssystem (3) nach Anspruch 1 oder Anspruch 2, **dadurch gekennzeichnet, dass** das mindestens eine Wärmetransferrohr (1) und/oder das mindestens eine Heizkabel (2, 2') außenseitig zumindest teilweise von einem ersten Element (4, 8) einer Klettverbindung ummantelt ist/sind.

4. Flächentemperierungssystem (3) nach Anspruch 3, **dadurch gekennzeichnet, dass** das erste Element (4, 8) der Klettverbindung spiralförmig oder doppelspiralförmig an der Außenseite des mindestens einen Wärmetransferrohrs (1) und/oder des mindestens einen Heizkabels (2, 2') angeordnet ist.

5. Flächentemperierungssystem (3) nach Anspruch 3 oder Anspruch 4, **dadurch gekennzeichnet, dass** an einer Seite des Trägerelements (9) ein zweites Element (12) der Klettverbindung angeordnet ist, so dass das/die flexible(n) Heizelement(e) (1, 2, 2') lösbar unter Bildung von Klettverbindungen an dem Trägerelement (9) festlegbar ist/sind.

6. Flächentemperierungssystem (3) nach einem der vorhergehenden Ansprüche, **dadurch gekennzeichnet, dass** das Trägerelement (9) einen formstabilen, flächigen Träger (11) umfasst.

7. Flächentemperierungssystem (3) nach Anspruch 6, **dadurch gekennzeichnet, dass** der formstabile, flächige Träger (11) als Polymerschaumstoff-Dämmschicht oder als Kunststoff-Hohlkammerplatte ausgebildet ist.

8. Flächentemperierungssystem (3) nach Anspruch 6 oder Anspruch 7, **dadurch gekennzeichnet, dass** das Trägerelement (9) eine das zweites Element (12) der Klettverbindung tragende Trägerfolie (10) umfasst, die auf einer Seite des formstabilen, flächigen Trägers (9) angeordnet ist.

9. Flächentemperierungssystem (3) nach einem der Ansprüche 3 bis 5, **dadurch gekennzeichnet, dass** das Trägerelement (9) als eine Trägerfolie ausgebildet ist, bei der zumindest auf einer Seite das zweite Element (12) der Klettverbindung angeordnet ist.

10. Flächentemperierungssystem (3) nach einem der Ansprüche 1 bis 9, **dadurch gekennzeichnet, dass** das Trägerelement (9) faltbar und/oder aufrollbar ausgebildet ist.

11. Flächentemperierungssystem (3) nach einem der Ansprüche 1 bis 10, **dadurch gekennzeichnet, dass** in mindestens einem Heizkabel (2, 2') eine Mehrzahl von Heizdrähten (4) geführt sind.

12. Flächentemperierungssystem (3) nach einem der Ansprüche 1 bis 11, **dadurch gekennzeichnet, dass** in mindestens einem Heizkabel (2, 2') mindestens ein Heizdraht (4) geführt ist, der in dem Heizkabel (2, 2') in der Längsrichtung des Heizkabels (2, 2') in eine Richtung geführt, an einem Ende des Heizkabels (2, 2') umgelenkt und in dem Heizkabel (2, 2') in die entgegengesetzte Richtung zurückgeführt ist.
